# EUROPEAN PATENT APPLICATION

(11) **EP 4 738 081 A1**
(43) Date of publication of application: **06.05.2026**
(21) Application number: 25172574.3
(22) Date of filing: 25.04.2025
(51) Int. Cl.: G06F 3/0481, G06F 3/04817, G06F 3/0482, G06F 3/04842, G06F 3/04883, G06F 3/04886

(54) **DISPLAY METHOD, APPARATUS, ELECTRONIC DEVICE, STORAGE MEDIUM, AND COMPUTER PROGRAM PRODUCT**

(30) Priority: 29.10.2024 CN 202411523636
(71) Applicant: Beijing Xiaomi Mobile Software Co., Ltd., Beijing 100085 (CN)
(72) Inventor: LI, Siqi, Beijing, 100085 (CN); LI, Yulian, Beijing, 100085 (CN); TANG, Han, Beijing, 100085 (CN)
(74) Representative: Dehns Germany Partnerschaft mbB

(57) **Abstract**

The present disclosure relates to a display method and apparatus, an electronic device, a storage medium, and a computer program product. The method includes: displaying a first application component in a first region of a first page of the electronic device, where the first application component includes at least one information element, and the first application component located in the first region of the first page is editable; displaying at least one first candidate information element associated with the first application component in a second region of the first page; where the at least one first candidate information element is used for updating the information element in the first application component.

## Description

### TECHNICAL FIELD

The present disclosure relates to the field of computer communication, and in particular, to a display method and apparatus for an electronic device, an electronic device, a storage medium, and a computer program product.

### BACKGROUND

Currently, different widgets may be provided in the electronic device to implement various functions, and the user may select the corresponding widget for display or use based on his own usage requirements. However, sometimes the content within the widget selected by the user may not fully meet the user's usage requirements. In such cases, the user may have to settle for a widget that is relatively close to his requirements.

### SUMMARY

To overcome the problems existing in related art, the present disclosure provides a display method and apparatus for an electronic device, an electronic device, a storage medium, and a computer program product to facilitate the user to customize and update an information element in an application component, thereby obtaining an application component that meets the user requirements.

According to a first aspect of the present invention, a display method is provided, which includes:
displaying a first application component in a first region of a first page of the electronic device; where the first application component includes at least one information element, and the first application component located in the first region of the first page is editable; and
displaying at least one first candidate information element associated with the first application component in a second region of the first page;
where the at least one first candidate information element is used for updating the information element in the first application component.

According to a second aspect of the present invention, an electronic device is provided, including:
a first display module, configured to display a first application component in a first region of a first page of the electronic device; where the first application component includes at least one information element, and the first application component located in the first region of the first page is editable; and
a second display module, configured to display at least one first candidate information element associated with the first application component in a second region of the first page;
where the at least one first candidate information element is used for updating the information element in the first application component.

According to a third aspect of the present invention, an electronic device is provided, including: a processor; and a memory, configured to store a computer program or an instruction; where the processor is configured to execute the computer program or instruction to implement the steps of the method according to any of the items in the above first aspect.

According to a fourth aspect of the present invention, a non-transitory computer-readable storage medium is provided, which stores a computer program or an instruction. When the computer program or instruction in the storage medium is executed by a processor, the steps of the method according to any of the items in the above first aspect are implemented.

According to a fifth aspect of the present invention, a computer program product is provided, including a computer program or an instruction. When executed by a processor, the computer program or instruction implements the steps of the method according to any of the items in the above first aspect.

The technical solution provided by the embodiments disclosed herein may include the following beneficial effects.

In the present disclosure, the first application component is displayed in the first region of the first page of the electronic device. The first application component includes at least one information element, and the first application component located in the first region of the first page is editable. At least one first candidate information element associated with the first application component is displayed in the second region of the first page. The at least one first candidate information element is used for updating the information element in the first application component.

By displaying an editable first application component in the first region of the first page and displaying at least one first candidate information element associated with the first application component in the second region of the first page, on one hand, the user can update the information element in the first application component through the first candidate information element on the first page, thereby facilitating the user to customize and update the information element in the application component to obtain an application component that meets the user requirements. On the other hand, displaying the first application component and the first candidate information element in different regions of the first page enables a real-time preview of the effect of the updated application component, which facilitates the user's adjustments.

It should be understood that the general descriptions above and the detailed descriptions in the following are merely exemplary and explanatory, and do not limit the present disclosure.

### BRIEF DESCRIPTION OF THE DRAWINGS

The accompanying drawings herein are incorporated into and constitute a part of this specification, illustrating embodiments consistent with the present disclosure, and serving to explain the principles of the present disclosure in conjunction with the specification.
FIG. 1 is a flowchart of a display method shown according to an exemplary embodiment.
FIG. 2A is a first schematic diagram of a first page shown according to an exemplary embodiment.
FIG. 2B is a second schematic diagram of a first page shown according to an exemplary embodiment.
FIG. 2C is a third schematic diagram of a first page shown according to an exemplary embodiment.
FIG. 3 is a schematic diagram of a weather application component shown according to an exemplary embodiment.
FIG. 4 is a first schematic diagram of page interaction shown according to an exemplary embodiment.
FIG. 5 is a second schematic diagram of page interaction shown according to an exemplary embodiment.
FIG. 6 is a third schematic diagram of page interaction shown according to an exemplary embodiment.
FIG. 7 is a fourth schematic diagram of page interaction shown according to an exemplary embodiment.
FIG. 8 is a fifth schematic diagram of page interaction shown according to an exemplary embodiment.
FIG. 9 is a sixth schematic diagram of page interaction shown according to an exemplary embodiment.
FIG. 10 is a seventh schematic diagram of page interaction shown according to an exemplary embodiment.
FIG. 11 is an eighth schematic diagram of page interaction shown according to an exemplary embodiment.
FIG. 12 is a ninth schematic diagram of page interaction shown according to an exemplary embodiment.
FIG. 13 is a block diagram of a display apparatus shown according to an exemplary embodiment.
FIG. 14 is a structural block diagram of an apparatus 1400 shown according to an exemplary embodiment.

### DETAILED DESCRIPTION

Exemplary embodiments will be described in detail herein, with examples shown in the accompanying drawings. When the following description refers to the accompanying drawings, unless otherwise indicated, the same numerals in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims.

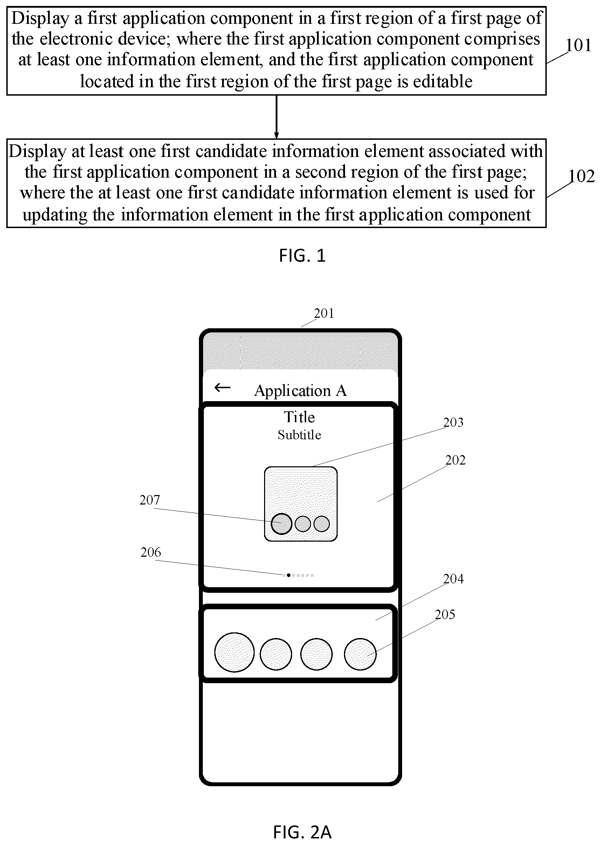

FIG. 1 is a flowchart of a display method shown according to an exemplary embodiment. As shown in FIG. 1, the method mainly includes the following steps.

In step 101, a first application component is displayed in a first region of a first page of the electronic device; where the first application component includes at least one information element, and the first application component located in the first region of the first page is editable.

In step 102, at least one first candidate information element associated with the first application component is displayed in a second region of the first page; where the at least one first candidate information element is used for updating the information element in the first application component.

The display method proposed in the present disclosure may be applied to an electronic device with a display screen. Here, the electronic device may include a terminal device, such as a mobile terminal. The mobile terminal may include a mobile phone, a tablet computer, a laptop computer, a wearable electronic device, and other devices.

In some embodiments, the electronic device may be a device supporting a folding function (a foldable device). The folding function may include a vertical folding function and a horizontal folding function. In response to the electronic device supporting the vertical folding function, the electronic device is folded along the length direction and enters a folded state. In response to the electronic device supporting the horizontal folding function, the electronic device is folded along the width direction and enters a folded state. Illustratively, the foldable device may include a left-right folding (vertical folding) device and a top-bottom folding (horizontal folding) device.

It should be noted that the application component may be a small application program located on the electronic device for quick access and control of the application program functions. In some embodiments, the application component may be used for displaying information elements, such as the weather, calendar events, stock prices, etc. In some other embodiments, the application component may also be used to perform a preset operation to achieve a predetermined function, such as playing music or controlling a smart home device.

In some embodiments, the application component may be an independent application program in the electronic device. Illustratively, the content displayed and the functions implemented by the application component are not related to other application programs. In some other embodiments, the application component may also be provided based on an application program already installed in the electronic device. This type of application component may implement the functions of the application program associated with the application component.

In the embodiments of the present disclosure, a first application component may be displayed in a first region of a first page of an electronic device. The first application component includes at least one information element, and the first application component located in the first region of the first page is editable. The first region of the first page may be understood as a preview region, which is used to display the first application component to be edited. Illustratively, each information element in the first application component, as well as the adjustment process for each information element in the first application component, may be displayed through the first region of the first page.

It should be noted that the information element may be visual information in the application component that is used to convey information, guide user operations, and enhance user experience. In some embodiments, the information elements may be displayed in the form of at least one of the following: text, icons, controls, images, etc. Illustratively, the information elements may include elements such as temperature information, humidity information, city information, and air quality information, etc.

In the embodiments of the present disclosure, while displaying the first application component in the first region of the first page, at least one first candidate information element associated with the first application component may be displayed in the second region of the first page. The second region of the first page may be understood as an editing region of the first page, which may be used to display candidate information elements. For example, based on the user's operation acting on the second region of the first page, the information elements in the first application component may be updated based on the first candidate information elements. Illustratively, all or part of the information elements in the first application component may be replaced based on the first candidate information elements.

Since there may be multiple application components in the electronic device, and due to the differences among the application components, the corresponding candidate information elements may also vary. In some embodiments, when displaying the first application component on the first page of the electronic device, the type of the first application component may be determined. Based on the type of the first application component, at least one first candidate information element associated with the first application component may be determined, and the first candidate information element may be displayed in the second region of the first page.

Illustratively, if the first application component is a component of a weather application, the first application component is used for displaying an information element related to weather, and the first candidate information element associated with the first application component is related to weather; if the first application component is a component of an air humidity application, the first application component is used for displaying information elements related to air humidity, and the first candidate information element associated with the first application component is related to air humidity, and so on.

FIGS. 2A to 2C are schematic diagrams of a first page shown according to an exemplary embodiment. As shown in FIGS. 2A-2C, a first region 202 of a first page 201 displays a first application component 203, and a second region 204 of the first page 201 displays at least one first candidate information element 205. The first application components in FIGS. 2A to 2C are different, and the corresponding first candidate information elements are also different.

In addition to fulfilling aesthetic or personalized needs, application components (widgets) play another crucial role: displaying the information that users care about the most in a clear and concise manner. The types and/or number of widgets corresponding to each application are limited, but different users have varying preferences for different information elements. For example, some users only care about temperature, while others are more concerned about air quality. Even if the user's personalized needs for appearance are met, the user's personalized needs for information cannot be met.

The present disclosure displays the first application component in the first region of the first page of the electronic device. The first application component includes at least one information element, and the first application component located in the first region of the first page is editable. At least one first candidate information element associated with the first application component is displayed in the second region of the first page. The at least one first candidate information element is used for updating the information element in the first application component.

By displaying an editable first application component in the first region of the first page and displaying at least one first candidate information element associated with the first application component in the second region of the first page, on one hand, users can update information elements in the first application component through the first candidate information element on the first page, thereby facilitating users to customize and update the information elements in the application component to obtain an application component that meets the user requirements. On the other hand, displaying the first application component and the first candidate information element in different regions of the first page enables a real-time preview of the effect of the updated application component, making it convenient for users to make adjustments.

In some embodiments, the method further includes:
in response to a touch operation on the first application component, determining an information element to be updated from the at least one information element of the first application component based on a target region that the touch operation acts on;
displaying the at least one first candidate information element associated with the first application component in the second region of the first page, including:
displaying at least one second candidate information element associated with the information element to be updated in the second region of the first page;
where the second candidate information element is a part or all of the first candidate information element, and the second candidate information element is used for updating the information element to be updated.

Here, the touch operation on the first application component may include a click operation, a long-press operation, etc. performed by the user on the first application component. After detecting the touch operation on the first application component, the information element to be updated may be determined from at least one information element of the first application component based on the target region that the touch operation acts on.

For example, the information element located in the target region may be determined as the information element to be updated, or the information element closest to the center of the target region may be determined as the information element to be updated, and so on.

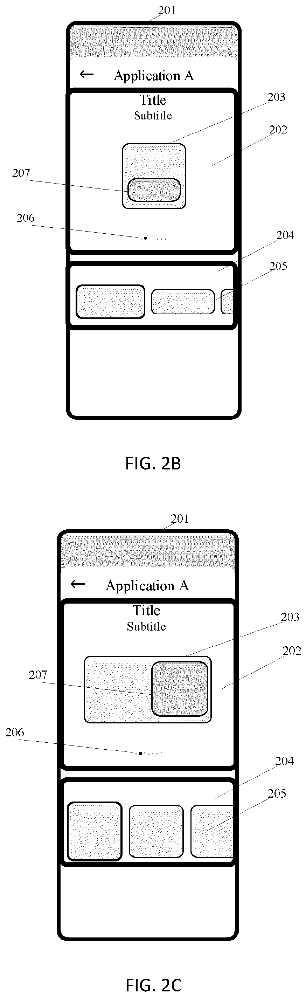

In some embodiments, the first application component may also be divided into regions based on the distribution information of various information elements within the first application component. Exemplarily, the first application component may be divided into a first component region and a second component region. An information element located in the first component region is editable, while an information element located in the second component region is non-editable. The first component region may also be referred to as a custom region or a replaceable region. Here, there may be one or more first component regions, and there may also be one or more second component regions. As illustrated in FIG. 2A, there may be multiple first component regions 207. As shown in FIGS. 2B and 2C, there may be a single first component region 207.

In the present disclosure, after determining the target region based on the touch operation acting on the first application component, it may be determined whether the target region is one or more of the first component regions, or whether the target region covers part or all of the first component region. Then, position focusing is performed to determine the information element to be updated from at least one information element of the first application component.

Illustratively, in a case that it is determined that the target region completely covers any first component region, the information elements located in that first component region may be determined as the information elements to be updated. Alternatively, in a case that it is determined that the target region covers a portion of any first component region, the overlapping area between the target region and that first component region may be determined, and the information element to be updated may be determined based on this overlapping area. For example, when the overlapping area is greater than or equal to a preset area, the information element in that first component region may be determined as the information element to be updated, etc.

In some embodiments, there will be one or more information elements to be updated in the first application component. In a case that there are multiple information elements to be updated, each of the information elements to be updated may be updated separately, or all of the individual elements to be updated may be updated at once.

It should be noted that the first application component (widget) that allows customization may have one or more first component regions (replaceable regions). When there are multiple first component regions, the current focused position (focus) may be switched through a touch operation (click), and the matching candidate information elements (replacement items) in the second region of the first page may change with the change of the focused position.

In an embodiment of the present disclosure, after determining the information element to be updated, at least one second candidate information element associated with the information element to be updated may be displayed in the second region of the first page.

Illustratively, taking the first application component as a component for displaying the time as an example, after determining that the information element to be updated is a dial plate in the first application component, at least one second candidate information element associated with the dial plate may be displayed in the second region of the first page. Here, the second candidate information element may be other dial plates different from the dial plate currently applied by the first application component.

Since the candidate information element displayed in the second region of the first page can adaptively change with the information element to be updated, it can further enhance the convenience of user customization of the first application component.

In some embodiments, the method further includes: in response to an operation on a target information element in the at least one second candidate information element, replacing the information element to be updated with the target information element; and displaying, in the first region of the first page, the first application component in which the information element to be updated is replaced with the target information element.

Here, the target information element may be one or more of at least one second candidate information element, and the operation on the target information element may be a selection operation for the target information element. For example, it may be a click operation, a long-press operation, etc. for the target information element.

After detecting an operation on the target information element, the information element to be updated may be replaced with the target information element, and the replaced first application component may be displayed in the first region of the first page. This enables direct modification and replacement of the information element, thereby achieving customization of the first application component. Additionally, after replacing the information element, a real-time preview may be provided, which is convenient for users to preview and make adjustments.

In some other embodiments, after detecting an operation on a target information element, the target information element and the information element to be updated may be fused, and the information element to be updated may be replaced based on the information element obtained through the fusion. The information element obtained through the fusion may include at least a part of the target information element and/or at least a part of the information element to be updated. By fusing the target information element and the information element to be updated, an information element with more comprehensive information can be obtained.

In some embodiments, in response to a switching operation on the second region of the first page, the candidate information elements in the second region of the first page may be switched and displayed. Illustratively, at least one candidate information element may be preset, and various candidate information elements may be arranged in a sequential manner. During the display process, the candidate information element that needs to be edited or customized may be displayed in the second region of the first page through user operation. The second region of the first page may be understood as an active region on the first page, which may also be referred to as an active window.

In some other embodiments, the candidate information element displayed in the second region of the first page may also be zoomed in, zoomed out, or moved, so as to facilitate operations on the candidate information element displayed in the second region of the first page, or to facilitate the preview of the candidate information element displayed in the second region of the first page.

In some embodiments, the method further includes:
in response to a switching operation on the first region of the first page, switching from displaying the first application component to displaying a second application component in the first region of the first page; and
switching from displaying the at least one first candidate information element in the second region of the first page to displaying at least one third candidate information element associated with the second application component in the second region of the first page;
where the at least one third candidate information element is used for updating an information element in the second application component.

It should be noted that the application component displayed in the first region of the first page may be switched. For example, at least one application component may be preset, and various application components may be arranged in a sequential manner. During the display process, the application component that needs to be edited or customized may be displayed in the first region of the first page through user operations. The first application component in the present disclosure is the application component that currently needs to be customized. The first region of the first page may be understood as an active region on the first page, which may also be referred to as an active window.

In other embodiments, the application component displayed in the first region of the first page may also be zoomed in, zoomed out, or moved, so as to facilitate touch operations on the application component displayed in the first region of the first page, or to facilitate the preview of the information element within the application component displayed in the first region of the first page.

In some embodiments, while displaying the application component in the first region of the first page, an indicator control may also be displayed on the first page to indicate the arrangement order of the currently displayed application component in the sequence of application components. As shown in FIGS. 2A-2C, the first page displays an indicator control 206. When the application component displayed in the first region 202 of the first page 201 changes, the display state of the indicator control 206 will also change, thereby facilitating the user to quickly locate the application component that needs to be displayed.

In some embodiments, the switching operation on the first region of the first page may be a sliding operation for the first region of the first page. Exemplarily, the first region of the first page may be slid left or right to switch to different application components.

After detecting the sliding operation for the first region of the first page, the display of the first application component in the first region of the first page may be switched to the display of the second application component. Here, the second application component may be the application component adjacent to the first application component in the sequence of application components.

When displaying the second application component in the first region of the first page, the display of at least one first candidate information element in the second region of the first page may be switched to the display of at least one third candidate information element associated with the second application component in the second region of the first page.

That is, the second application component is displayed in the first region of the first page, and at least one third candidate information element is synchronously displayed in the second region of the first page. The third candidate information element is an information element associated with the second application component.

Illustratively, if the second application component is a component of a weather application, the second application component is used for displaying information elements related to weather, and the third candidate information element associated with the second application component is related to weather; if the second application component is a component of an air humidity application, the second application component is used for displaying information elements related to the air humidity, and the third candidate information element associated with the second application component is related to air humidity, and so on.

In the embodiments of the present disclosure, when the application component displayed in the first region of the first page changes, the candidate information elements in the second region of the first page will also change accordingly. This facilitates the user in quickly locating the candidate information element associated with the currently displayed application component, thereby realizing customized adjustments to the application component.

In some embodiments, the method further includes:
in a case that the first application component is of a target type, displaying at least one first control in the second region of the first page; and
in response to an operation on the at least one first control, adjusting a display style of the first application component and/or the information element in the first application component.

It should be noted that the application component of the target type may be: an application component that includes information elements that need to be displayed through other pages. Exemplarily, the application component of the target type may be an application component that includes a city information element, where the city information element cannot be fully displayed on the first page and need to be displayed on other pages, etc.

In a case that the first application component is of the target type, while at least one first candidate information element is displayed in the second region of the first page, at least one first control may also be displayed. Each first control has a corresponding processing function. In some embodiments, the processing functions corresponding to the various first controls are different. For example, the first control may be used to adjust the functions that the first application component can achieve; or the first control may control the activation or deactivation of the target function in the first application component; or the first control may be linked to other function entrances, and the function the first control is linked to can be realized through the first control, etc.

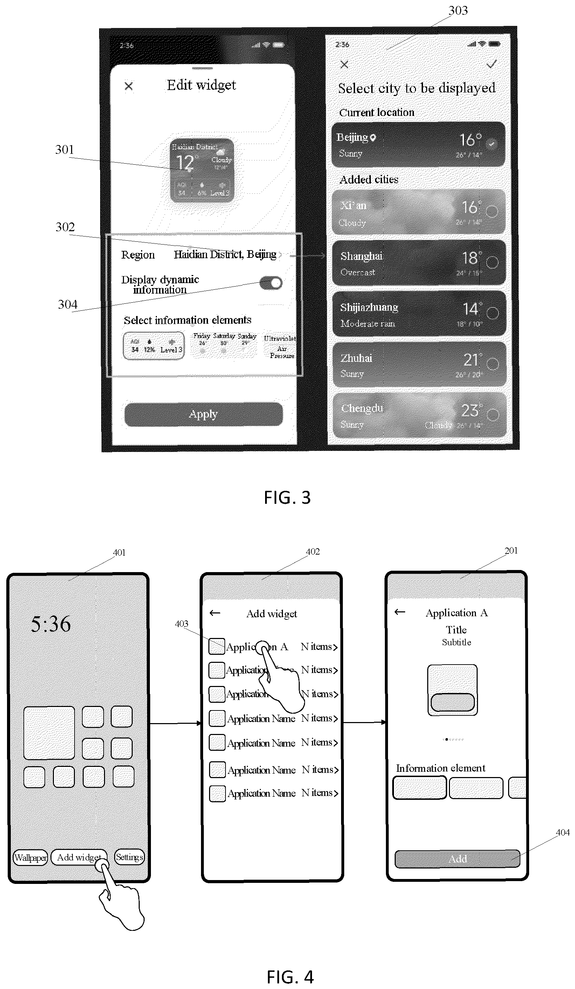

As shown in FIG. 3, the first application component is the weather application component 301. Since it is necessary to locate the current city, the city preview page 303 linked to the first control 302 may be entered through the first control 302, and the city information element may be displayed on the city preview page 303 to facilitate the selection of the city. In some embodiments, the activation or deactivation of the dynamic display function, etc., may also be controlled through the first control 304.

In the embodiments of the present disclosure, whether to display the first control in the second region of the first page may be determined based on the type of the first application component. In a case that the first application component is of the target type, at least one first control may be displayed in the second region of the first page, and based on the operation on the at least one first control, adjustments can be made to the display style of the first application component and/or the information element in the first application component. The display style may include a display effect and/or a display layout, where the display effect may include a static display effect, a dynamic display effect, etc. The display layout may include a horizontal display layout, a vertical display layout, etc.

In the embodiments of the present disclosure, the display of the first control may be performed simultaneously with the display of at least one first candidate information element, which can quickly implement the specific functions of the first application component of the target type and improve the intelligence and convenience of customizing the application component.

In some embodiments, the method further includes:
in response to an operation on a second control displayed on a second page, displaying at least one application identifier on the first page or a third page; where the operation on the second control is used for indicating addition of an application component, and the first page, the second page, and the third page are all different; and
in a case of detecting an operation on the application identifier of the first application component, displaying the first application component in the first region of the first page, and displaying the at least one first candidate information element in the second region of the first page.

It should be noted that the second page may be the main page of the electronic device, illustratively, it may be the desktop of the electronic device. In some embodiments, the display of the second control may be triggered by long-pressing the main page of the electronic device. In some embodiments, while displaying the second control, the second control may be identified, for example, the second control may be identified by "add widget".

Upon detecting an operation on the second control, at least one application identifier may be displayed on the first page or the third page. Both the second and third pages are different from the first page.

In the embodiments of the present disclosure, at least one application identifier, a first application component, and a first candidate information element may be displayed on the same page, namely the first page. Alternatively, at least one application identifier and the first application component may be displayed on different pages, that is, at least one first application identifier is displayed on the third page.

In the embodiments of the present disclosure, when the operation for the application identifier of the first application component is detected, the first application component is displayed in the first region of the first page, and at least one first candidate information element is displayed in the second region of the first page. Here, when the application identifier of the first application component is detected, it is determined that the first application component should be added. At this moment, the first application component may be displayed in the first region of the first page, and the first candidate information element may be displayed in the second region of the first page, to facilitate the user to customize the information element in the first application component before adding the first application component, thereby making the added application component more in line with user needs.

In some embodiments, displaying the at least one application identifier on the first page or the third page, includes:
in a case that a size of a display screen of the electronic device is less than or equal to a preset threshold, displaying the at least one application identifier on the third page; and
in a case of detecting the operation on the application identifier of the first application component, displaying the first application component in the first region of the first page, and displaying the at least one first candidate information element in the second region of the first page, including:
in a case of detecting the operation on the application identifier of the first application component, switching from the third page to the first page, displaying the first application component in the first region of the first page, and displaying the at least one first candidate information element in the second region of the first page.

Since it is impossible to fully display all information on the same page when the size of the display screen of the electronic device is less than or equal to a preset threshold, at least one application identifier may be displayed on the third page. As shown in FIG. 4, one may navigate from the second page 401 to the third page 402, and display at least one application identifier on the third page 402. After detecting an operation on the application identifier (application A) 403 for the first application component, one may navigate from the third page 402 to the first page 201, display the first application component in the first region 202 of the first page 201, and display at least one first candidate information element in the second region 204 of the first page 201. The electronic device with a screen size less than the preset threshold may be a mobile phone.

In other embodiments, when the electronic device supports a folding function and is in a folded state, at least one application identifier may be displayed on the third page. Upon detecting an operation on the application identifier of the first application component, the third page is switched to the first page, the first application component is displayed in the first region of the first page, and at least one first candidate information element is displayed in the second region of the first page.

In the embodiments of the present disclosure, the size of the display screen of the electronic device may be determined first. When the size of the display screen of the electronic device is relatively small, different functions may be implemented through different pages, thereby enabling the content displayed on each page to be more comprehensive and more convenient for user operation.

In some embodiments, displaying the at least one application identifier on the first page or the third page, includes:
in a case that the electronic device supports a folding function and is in an unfolded state, displaying the at least one application identifier on the first page; where the at least one application identifier, the first application component, and the at least one first candidate information element are displayed in a first presentation style; and
in a case that a size of a display screen of the electronic device is greater than a preset threshold, displaying the at least one application identifier on the first page; where the at least one application identifier, the first application component, and the at least one first candidate information element are displayed in a second presentation style;
where the first presentation style is different from the second presentation style.

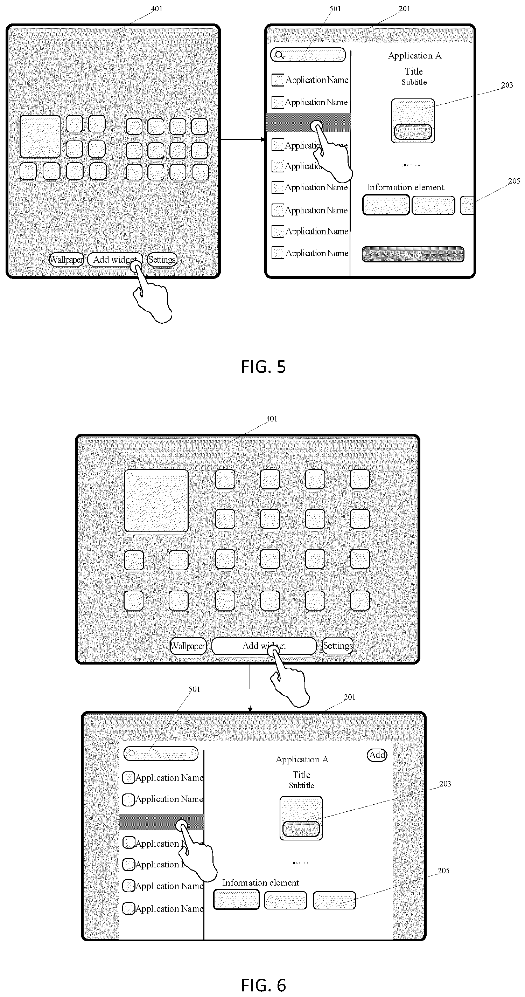

In a case that the electronic device supports a folding function and is in an unfolded state, all information may be fully displayed on the same page, so at least one application identifier may be displayed on the first page. As shown in FIG. 5, at least one application identifier, a first application component 203, and at least one first candidate information element 205 may be displayed on the first page 201, which can facilitate the user to make comparative views. In some embodiments, a search box 501 may also be displayed on the first page 201 to facilitate quick search of corresponding application components based on the application identifier.

Since all information can be fully displayed on the same page when the size of the display screen of the electronic device exceeds a preset threshold, at least one application identifier may be displayed on the first page. As shown in FIG. 6, at least one application identifier, a first application component 203, and at least one first candidate information element 205 may be displayed on the first page 20, which is convenient for users to compare and view. The electronic device with a screen size exceeding the preset threshold may be a tablet computer. In some embodiments, a search box 501 may also be displayed on the first page 201 to facilitate quick search of corresponding application components based on the application identifier.

In some embodiments, the presentation style of at least one application identifier, a first application component, and at least one first candidate information element may be determined based on the screen size of the electronic device. Depending on different folding states and/or screen sizes of the electronic device, the presentation style of the at least one application identifier, the first application component, and the at least one first candidate information element may also vary.

Illustratively, when the electronic device supports the folding function and is in the unfolded state, at least one application identifier, the first application component, and the at least one first candidate information element may be displayed in accordance with a first presentation style. When the size of the display screen of the electronic device is larger than the preset threshold, the at least one application identifier, the first application component, and the at least one first candidate information element may be displayed in accordance with a second presentation style, where the first presentation style and the second presentation style are different.

FIG. 5 shows a situation where the electronic device supports the folding function and is in the unfolded state, and FIG. 6 illustrates a situation where the size of the electronic device is larger than the preset threshold. The size of the display screen of the electronic device in FIG. 5 is smaller than that in FIG. 6, resulting in more content displayed vertically in FIG. 5 than in FIG. 6, and less content displayed horizontally in FIG. 5 than in FIG. 6.

In the embodiments of the present disclosure, the size of the display screen of the electronic device may be determined first. When the size of the display screen of the electronic device is relatively large, all contents may be displayed on the same page through different presentation styles, thereby facilitating user's comparison and operation without the need to switch back and forth between multiple pages, improving the efficiency of customizing and adjusting information elements in components.

In some embodiments, the method further includes:
in response to a touch operation on a third application component displayed on the second page, displaying at least one third control, where each third control has a corresponding processing function, and the third application component is either the first application component or associated with the first application component; and
displaying the first application component in the first region of the first page of the electronic device, including:
in a case of detecting a triggering operation on the third control, displaying the first application component in the first region of the first page.

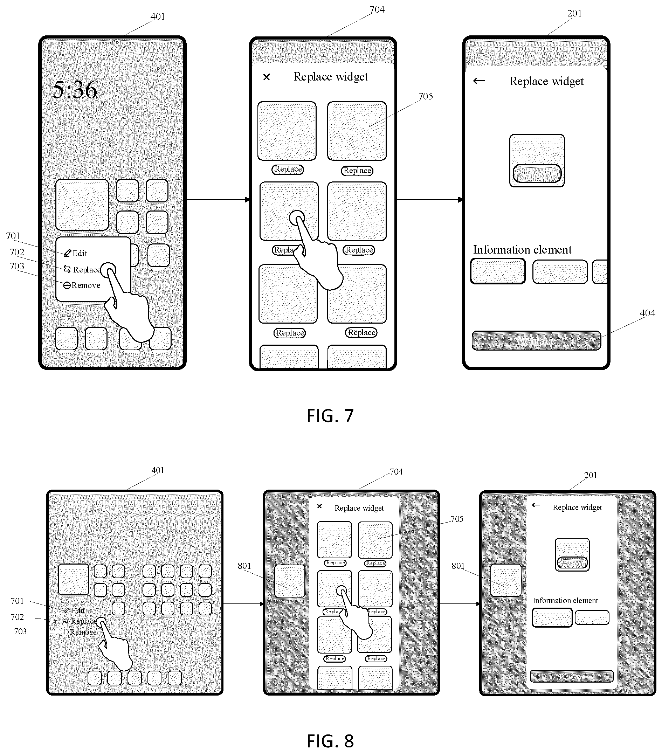

Here, the third application component may be any application component displayed on the second page. The touch operation on the third application component may be a long press operation, double-click operation, etc. on the third application component. At least one third control may be an associated control of the third application component, which is used for different processing of the third application component. Exemplarily, the third application component may have a replacement function, an editing function, a removal function, and other functions. As shown in FIGS. 7-9, the second page 401 may display a third control 701 with the editing function, a third control 702 with the replacement function, and a third control 703 with the removal function. In some embodiments, the third control may be displayed in a floating manner on the second page 401.

It should be noted that the third application component may be the first application component, that is, the application component that currently needs to be customized, or the third application component may be an application component associated with the first application component. Exemplarily, if it is possible to navigate to the first page for customizing the first application component through the third application component, it may be understood that the third application component is an application component associated with the first application component.

In the embodiments of the present disclosure, after detecting a touch operation on the third application component displayed on the second page, at least one third control may be displayed. In a case that a triggering operation on the third control is detected, the first application component is displayed in the first region of the first page.

By setting the third control, it is possible to navigate from the display of the third application component to the display of the first application component, and navigate from the second page with a display function to the first page with an editing function, thereby realizing the customized processing of the first application component.

In some embodiments, in a case of detecting the triggering operation on the third control, displaying the first application component in the first region of the first page, includes:
in response to a triggering operation on the third control with a replacement function, displaying at least one candidate application component on a fourth page; and
determining a target candidate application component that a replacement operation acts on in the at least one candidate application component as the first application component, and displaying the first application component in the first region of the first page.

It should be noted that the triggering operation for the third control with a replacement function may be a click operation on the third control with the replacement function. After detecting the triggering operation, at least one candidate application component may be displayed on the fourth page, where the fourth page is different from the first page. While at least one candidate application component is displayed on the fourth page, it may be detected whether there is a replacement operation acting on at least one candidate application component.

In some embodiments, the replacement operation may be a selection operation on a target candidate application component in at least one candidate application component, such as a click operation on the target candidate application component, etc. In the present disclosure, the target candidate application component on which the replacement operation acts may be determined as the first application component. In this case, the first application component is not the third application component displayed on the second page, but an application component selected from the candidate application components using the third application component as the entrance.

In the embodiments of the present disclosure, before replacing the third application component displayed on the second page, a target candidate application component may be selected from at least one candidate application component displayed on the fourth page as the first application component, and the customization processing may be performed on the information elements of the first application component.

In some embodiments, after the customization processing of the first application component is completed on the first page, the third application component displayed on the second page may be replaced based on the processed first application component.

In the embodiments of the present disclosure, the replacement of the third application component on the second page can be achieved through the third control. Before replacing the third application component, the selected first application component may be customized, which can make the updated application component more in line with user needs.

In some embodiments, when the electronic device supports a folding function and is in a folded state, or when the size of the display screen of the electronic device is less than or equal to a preset threshold, at least one candidate application component may be displayed solely on the fourth page. As shown in FIG. 7, at least one candidate application component 705 may be displayed solely on the fourth page 704.

Since when the size of the display screen of the electronic device is small, if too much content is displayed, it will lead to a poor preview effect of the candidate application component. In the embodiments of the present disclosure, when the size of the display screen of the electronic device is small, only the candidate application component may be displayed, which improves the preview effect and facilitates the user's selection.

In some embodiments, displaying the at least one candidate application component on the fourth page, includes:
in a case that the electronic device supports a folding function and is in an unfolded state, or in a case that a size of a display screen of the electronic device is greater than a preset threshold, displaying the at least one candidate application component in a first region of the fourth page, and displaying the third application component in a second region of the fourth page.

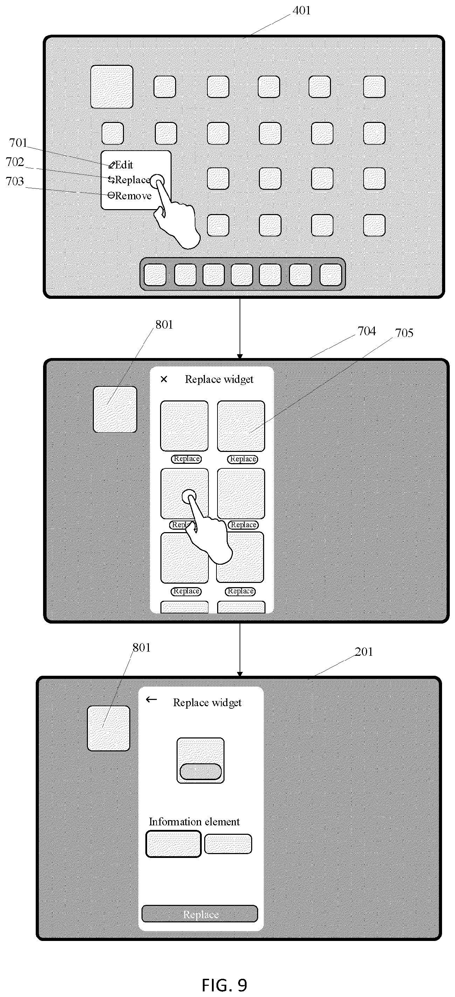

When the size of the display screen of the electronic device is large, more content may be displayed, thereby facilitating the user to make comparison and view. As shown in FIGS. 8 and 9, at least one candidate application component 705 may be displayed in the first region of the fourth page 704, and the third application component 801 may be displayed in the second region of the fourth page 704. In this way, the user can compare and select the target candidate application component based on the third application component 801 displayed in the second region of the fourth page 704, thereby more accurately selecting the application component that meets the requirements.

In some embodiments, after the selection of the application component is completed on the fourth page, the first page may be accessed.

In some embodiments, in a case that a triggering operation on the third control is detected, displaying the first application component in the first region of the first page, includes:
in response to a triggering operation on the third control with an editing function, determining the third application component as the first application component, and displaying the first application component in the first region of the first page.

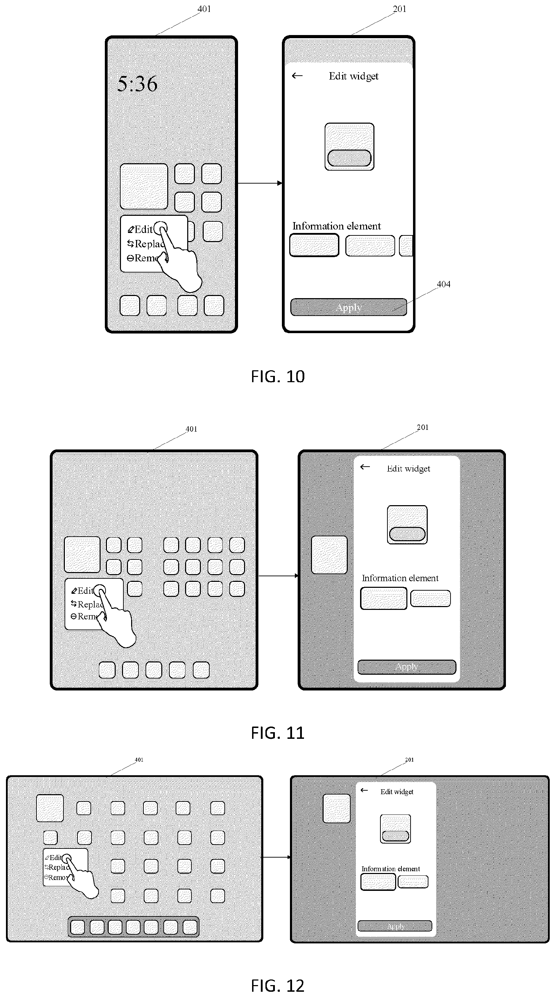

It should be noted that the triggering operation for the third control with the editing function may be a click operation on the third control with the editing function. As shown in FIG. 10, after detecting the triggering operation, the third application component may be directly displayed as the first application component in the first region of the first page 201.

In some embodiments, in a case that the electronic device supports a folding function and is in an unfolded state, or in a case that a size of a display screen of the electronic device is greater than a preset threshold, the method further includes:
displaying the first application component in a third region of the first page; where the first application component displayed in the third region of the first page is used for comparison.

As shown in FIGS. 8 to 12, when the electronic device supports the folding function and is in the unfolded state, or when the size of the display screen of the electronic device is larger than the preset threshold, the first application component may be displayed in the third region of the first page 201; the first application component displayed in the third region of the first page is used for comparison. The first application component displayed in the third region of the first page may be either the third application component 801 or a target candidate application component 403 selected from the candidate application components.

In some embodiments, the first application component displayed in the third region of the first page is not editable. The user compares the above first application component with the editable first application component displayed in the first region of the first page, thereby facilitating the user to perform corresponding operations on the first application component in the first region of the first page.

In some embodiments, the method further includes:
in response to an operation on a fourth control displayed on the first page, generating a target application component based on the information element in the first application component in the first region of the first page when the operation on the fourth control is detected; and
displaying the target application component.

In some embodiments, when the fourth control is displayed, it may be labeled. For example, the fourth control may be labeled with texts such as "add", "apply", "replace", etc.

Illustratively, as shown in FIG. 4, if the first application component is a newly added application component, the fourth control 404 may be labeled with "add". As shown in FIG. 7, if the first application component is a replacement for the initially displayed third application component, the fourth control 404 may be labeled with "replace". as shown in FIG. 10, if the first application component is an edit to the initially displayed third application component, the fourth control 404 may be labeled with "apply".

The operation on the fourth control may be a click operation on the fourth control, etc. After detecting the operation on the fourth control, a target application component may be generated based on the information element of the first application component in the first region of the first page at the moment of detecting the operation on the fourth control, and the target application component may be displayed.

Here, the target application component refers to a new application component obtained after the user customizes the information element in the original first application component.

In some embodiments, after obtaining the target application component, the target application component may be added to a sequence of application components and saved. In this way, when the user needs to use the target application component, the target application component may be directly obtained without the need for re-customization.

In the embodiments of the present disclosure, by customizing the information element in application component, the problem that the default provided application components (widgets) cannot fully meet the users' personalized information needs can be addressed efficiently and at a low cost, with strong scalability. Various system services, third-party application components, or application program can meet users' customization needs at the information level and the appearance level through the same interface structure and entry path, and by means of candidate information elements and customizable regions.

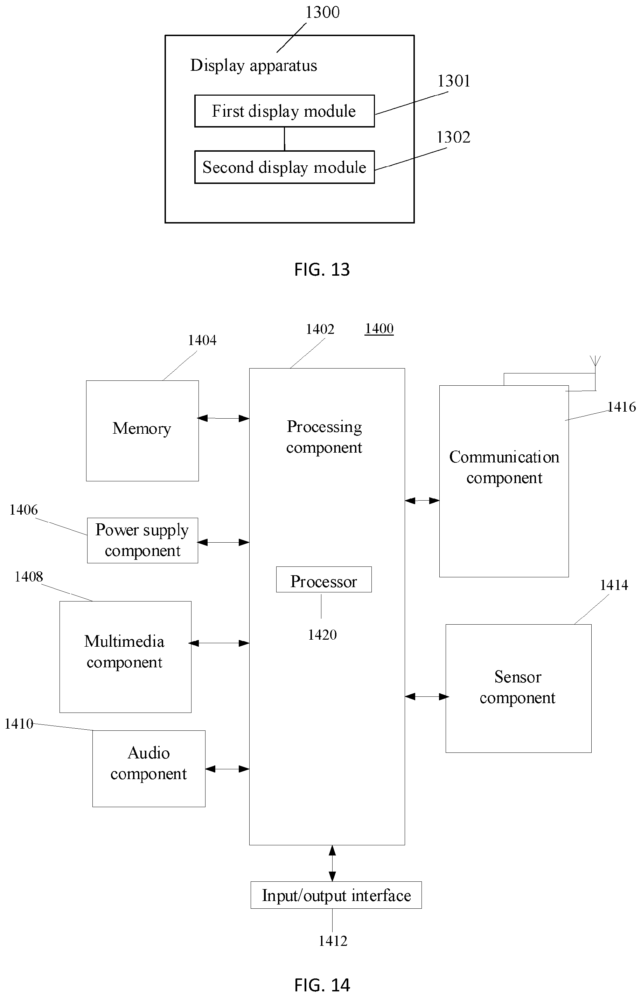

FIG. 13 is a block diagram of a display apparatus according to an exemplary embodiment. As shown in FIG. 13, the apparatus 1300 mainly includes:
a first display module 1301, configured to display a first application component in a first region of a first page of the electronic device; where the first application component includes at least one information element, and the first application component located in the first region of the first page is editable; and
a second display module 1302, configured to display at least one first candidate information element associated with the first application component in a second region of the first page;
where the at least one first candidate information element is used for updating the information element in the first application component.

In some embodiments, the apparatus 1300 further includes:
a determination module, configured to, in response to a touch operation on the first application component, determine an information element to be updated from the at least one information element of the first application component based on a target region that the touch operation acts on; and
a second display module 1302, configured to:
   display at least one second candidate information element associated with the information element to be updated in the second region of the first page;
   where the second candidate information element is a part or all of the first candidate information element, and the second candidate information element is used for updating the information element to be updated.

In some embodiments, the apparatus 1300 further includes:
a replacement module, configured to replace the information element to be updated with the target information element in response to an operation on a target information element in the at least one second candidate information element; and
a third display module, configured to display the first application component in the first region of the first page, where the information element to be updated is replaced with the target information element.

In some embodiments, the apparatus 1300 further includes:
a first switching module, configured to switch from displaying the first application component in the first region of the first page to displaying a second application component in response to a switching operation on the first region of the first page; and
a second switching module, configured to switch from displaying the at least one first candidate information element in the second region of the first page to displaying at least one third candidate information element associated with the second application component in the second region of the first page;
where the at least one third candidate information element is used for updating an information element in the second application component.

In some embodiments, the apparatus 1300 further includes:
a fourth display module, configured to display at least one first control in the second region of the first page in a case that the first application component is of a target type; and
an adjustment module, configured to adjust a display style of the first application component and/or the information element in the first application component in response to an operation on the at least one first control.

In some embodiments, the apparatus 1300 further includes:
a fifth display module, configured to display at least one application identifier on the first page or a third page in response to an operation on a second control displayed on the second page; where the operation on the second control is used for indicating the addition of an application component, and the first page, the second page, and the third page are all different; and
a sixth display module, configured to, in a case of detecting an operation on the application identifier of the first application component, display the first application component in the first region of the first page, and display the at least one first candidate information element in the second region of the first page.

In some embodiments, the fifth display module is configured to:
in a case that a size of a display screen of the electronic device is less than or equal to a preset threshold, display the at least one application identifier on the third page; and
a sixth display module, configured to:
   in the case of detecting the operation on the application identifier of the first application component, switch from the third page to the first page, displaying the first application component in the first region of the first page, and displaying the at least one first candidate information element in the second region of the first page.

In some embodiments, the fifth display module is configured to:
in a case that the electronic device supports a folding function and is in an unfolded state, display the at least one application identifier on the first page; where the at least one application identifier, the first application component, and the at least one first candidate information element are displayed in a first presentation style; and
in a case that a size of a display screen of the electronic device is greater than a preset threshold, display the at least one application identifier on the first page; where the at least one application identifier, the first application component, and the at least one first candidate information element are displayed in a second presentation style;
where the first presentation style and the second presentation style are different.

In some embodiments, the apparatus 1300 further includes:
a seventh display module, configured to display at least one third control in response to a touch operation on a third application component displayed on the second page, where each of the third control has a corresponding processing function, and the third application component is either the first application component or associated with the first application component.

The first display module 1301 is configured to:
in a case of detecting a triggering operation on the third control, display the first application component in the first region of the first page.

In some embodiments, the first display module 1301 is configured to:
in response to a triggering operation on the third control with a replacement function, display at least one candidate application component on the fourth page; and
determine a target candidate application component that a replacement operation acts on in the at least one candidate application component as the first application component, and display the first application component in the first region of the first page.

In some embodiments, the first display module 1301 is configured to:
in a case that the electronic device supports a folding function and is in an unfolded state, or in a case that a size of a display screen of the electronic device is greater than a preset threshold, display the at least one candidate application component in a first region of the fourth page, and display the third application component in a second region of the fourth page.

In some embodiments, the first display module 1301 is configured to:
in response to a triggering operation on the third control with an editing function, determine the third application component as the first application component, and display the first application component in the first region of the first page.

In some embodiments, in a case that the electronic device supports a folding function and is in an unfolded state, or in a case that a size of a display screen of the electronic device is greater than a preset threshold, the apparatus further includes:
an eighth display module, configured to display the first application component in a third region of the first page; where the first application component displayed in the third region of the first page is used for comparison.

In some embodiments, the apparatus 1300 further includes:
a generation module, configured to, in response to an operation on a fourth control displayed on the first page, generate a target application component based on the information element in the first application component in the first region of the first page when the operation on the fourth control is detected; and
a ninth display module, configured to display the target application component.

Regarding the apparatus in the above embodiments, the specific ways in which each module performs operations have been described in detail in the embodiments related to the method, and will not be elaborated here.

FIG. 14 is a structural block diagram of an apparatus 1400 according to an exemplary embodiment. For example, the apparatus 1400 may be a mobile phone, a computer, a digital broadcast terminal, a messaging device, a game console, a tablet device, a medical device, a fitness device, a personal digital assistant, etc.

Referring to FIG. 14, the apparatus 1400 may include one or more of the following components: a processing component 1402, a memory 1404, a power supply component 1406, a multimedia component 1408, an audio component 1410, an input/output (I/O) interface 1412, a sensor component 1414, and a communication component 1416.

The processing component 1402 typically controls the overall operation of the apparatus 1400, such as operations associated with at least one of display, telephone calls, data communication, camera operations, and recording operations. The processing component 1402 may include one or more processors 1420 to execute instructions to complete all or part of the steps of the methods described above. Additionally, the processing component 1402 may include one or more modules to facilitate the interaction between the processing component 1402 and other components. For example, the processing component 1402 may include a multimedia module to facilitate the interaction between the multimedia component 1408 and the processing component 1402.

The memory 1404 is configured to store various types of data to support operation on the apparatus 1400. Examples of such data include at least one of the following: instructions for any application or method operating on the apparatus 1400, contact data, phonebook data, messages, pictures, and videos. The memory 1404 may be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1406 provides power to various components of the apparatus 1400. The power supply component 1406 may include at least one of the following: a power management system, one or more power sources, and other components associated with generating, managing, and distributing power to the apparatus 1400.

The multimedia component 1408 includes a screen that provides an output interface between the apparatus 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only detect the boundaries of touch or swipe actions but also measure the duration and pressure associated with touch or swipe operations. In some embodiments, the multimedia component 1408 includes a front camera and/or a rear camera. When the apparatus 1400 is in an operational mode, such as a shooting mode or a video mode, the front camera and/or the rear camera may receive external multimedia data. Each front camera and rear camera can be a fixed optical lens system or have focal length and optical zoom capabilities.

The audio component 1410 is configured to output and/or input audio signals. For example, the audio component 1410 includes a microphone (MIC) that is configured to receive an external audio signal when the apparatus 1400 is in an operation mode such as a call mode, a recording mode, and a voice recognition mode. The received audio signal may be further stored in the memory 1404 or transmitted via the communication component 1416. In some embodiments, the audio component 1410 further includes a speaker for outputting audio signals.

The I/O interface 1412 provides an interface between the processing component 1402 and peripheral interface modules, which may be a keyboard, click wheel, buttons, etc. These buttons may include, but are not limited to, a home button, a volume button, a starting button, and a locking button.

The sensor assembly 1414 includes one or more sensors for providing various aspects of status assessment for the apparatus 1400. For example, the sensor assembly 1414 may detect an open/closed state of the apparatus 1400, the relative positioning of components, such as the display and keypad of the apparatus 1400. The sensor assembly 1414 may also detect changes in the position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor assembly 1414 may include a proximity sensor configured to detect the presence of nearby objects without any physical contact. The sensor assembly 1414 may also include a light sensor, such as a complementary metal-oxide-semiconductor (CMOS) or charge-coupled device (CCD) image sensor, for use in imaging applications. In some embodiments, the sensor assembly 1414 may further include, but is not limited to, at least one of an acceleration sensor, a gyroscope sensor, a magnetic sensor, a pressure sensor, and a temperature sensor.

The communication component 1416 is configured to facilitate communication between the apparatus 1400 and other devices in a wired or wireless manner. The apparatus 1400 may access a wireless network based on a communication standard, such as Wi-Fi, 4G, 5G, or a combination thereof. In one exemplary embodiment, the communication component 1416 receives a broadcast signal or broadcast-related information from an external broadcast management system via a broadcast channel. In one exemplary embodiment, the communication component 1416 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 1400 can be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components.

In an exemplary embodiment, a non-transitory computer-readable storage medium including instructions is also provided, such as a memory 1404 containing executable instructions or computer programs. The aforementioned instructions or computer programs can be executed by the processor 1420 of the apparatus 1400 to implement the aforementioned method. For example, the non-transitory computer-readable storage medium can be a ROM, a Random Access Memory (RAM), a Compact Disc Read-Only Memory (CD-ROM), a magnetic tape, a floppy disk, an optical data storage device, etc.

A non-transitory computer-readable storage medium, when the instructions stored in the storage medium are executed by a processor of an electronic device, enables the electronic device to perform any of the display methods described in the embodiments of the present disclosure. For example, the method includes: displaying a first application component in a first region of a first page of the electronic device; where the first application component includes at least one information element, and the first application component located in the first region of the first page is editable; and
displaying at least one first candidate information element associated with the first application component in the second region of the first page;
where the at least one first candidate information element is used for updating the information element in the first application component.

An embodiment of the present disclosure provides a computer program product, which includes a computer program or executable instructions stored in a computer-readable storage medium. A processor of a computer device reads the computer program or executable instructions from the computer-readable storage medium, and executes the computer program or executable instructions, enabling the computer device to perform the above display method described in any of the embodiments of the present disclosure. The specification and embodiments are merely exemplary, and the true scope of the present disclosure are indicated by the claims.

## Claims

1. A display method for an electronic device, comprising:
displaying (101) a first application component (203) in a first region (202) of a first page (201) of the electronic device; wherein the first application component (203) comprises at least one information element, and the first application component (203) located in the first region (202) of the first page (201) is editable; and
displaying (102) at least one first candidate information element (205) associated with the first application component (203) in a second region (204) of the first page (201);
wherein the at least one first candidate information element (205) is used for updating the information element in the first application component (203).

2. The display method according to claim 1, wherein the method further comprises:
in response to a touch operation on the first application component (203), determining an information element to be updated from the at least one information element of the first application component (203) based on a target region that the touch operation acts on;
wherein displaying the at least one first candidate information element (205) associated with the first application component (203) in the second region (204) of the first page (201), comprises:
displaying at least one second candidate information element associated with the information element to be updated in the second region (204) of the first page (201);
wherein the second candidate information element is a part or all of the at least one first candidate information element (205), and the second candidate information element is used for updating the information element to be updated.

3. The display method according to claim 2, wherein the method further comprises:
in response to an operation on a target information element in the at least one second candidate information element, replacing the information element to be updated with the target information element; and
displaying, in the first region (202) of the first page (201), the first application component (203) in which the information element to be updated is replaced with the target information element.

4. The display method according to any one of the preceding claims, wherein the method further comprises:
in response to a switching operation on the first region (202) of the first page (201), switching from displaying the first application component (203) to displaying a second application component in the first region (202) of the first page (201); and
switching from displaying the at least one first candidate information element (205) in the second region (204) of the first page (201) to displaying at least one third candidate information element associated with the second application component in the second region (204) of the first page (201);
wherein the at least one third candidate information element is used for updating an information element in the second application component.

5. The display method according to any one of the preceding claims , wherein the method further comprises:
in a case that the first application component (203) is of a target type, displaying at least one first control (302, 304) in the second region (204) of the first page (201); and
in response to an operation on the at least one first control (302, 304), adjusting a display style of the first application component (203) and/or the information element in the first application component (203).

6. The display method according to any one of the preceding claims , wherein the method further comprises:
in response to an operation on a second control displayed on a second page (401), displaying at least one application identifier on the first page (201) or a third page (402); wherein the operation on the second control is used for indicating an addition of an application component, and the first page (201), the second page (401), and the third page (402) are all different; and
in a case of detecting an operation on the application identifier of the first application component (203), displaying the first application component (203) in the first region (202) of the first page (201), and displaying the at least one first candidate information element (205) in the second region (204) of the first page (201).

7. The display method according to claim 6, wherein displaying the at least one application identifier on the first page (201) or the third page (402), comprises:
in a case that a size of a display screen of the electronic device is less than or equal to a preset threshold, displaying the at least one application identifier on the third page (402);
wherein in a case of detecting the operation on the application identifier of the first application component (203), displaying the first application component (203) in the first region (202) of the first page (201), and displaying the at least one first candidate information element (205) in the second region (204) of the first page (201), comprises:
in a case of detecting the operation on the application identifier of the first application component (203), switching from the third page (402) to the first page (201), displaying the first application component (203) in the first region (202) of the first page (201), and displaying the at least one first candidate information element (205) in the second region (204) of the first page (201).

8. The display method according to claim 6 or 7, wherein displaying the at least one application identifier on the first page (201) or the third page (402) comprises:
in a case that the electronic device supports a folding function and is in an unfolded state, displaying the at least one application identifier on the first page (201); wherein the at least one application identifier, the first application component (203), and the at least one first candidate information element (205) are displayed in a first presentation style; and
in a case that a size of a display screen of the electronic device is greater than a preset threshold, displaying the at least one application identifier on the first page (201); wherein the at least one application identifier, the first application component (203), and the at least one first candidate information element (205) are displayed in a second presentation style;
wherein the first presentation style and the second presentation style are different.

9. The display method according to any one of the preceding claims , wherein the method further comprises:
in response to a touch operation on a third application component (801) displayed on the second page (401), displaying at least one third control (701, 702, 703); wherein each of the third control (701, 702, 703) has a corresponding processing function, and the third application component (801) is either the first application component (203) or associated with the first application component (203);
wherein displaying the first application component (203) in the first region (202) of the first page (201) of the electronic device, comprises:
in a case of detecting a triggering operation on the third control (701, 702, 703), displaying the first application component (203) in the first region (202) of the first page (201).

10. The display method according to claim 9, wherein in the case of detecting the triggering operation on the third control (701, 702, 703), displaying the first application component (203) in the first region (202) of the first page (201) comprises:
in response to a triggering operation on the third control (701, 702, 703) with a replacement function, displaying at least one candidate application component (705) on a fourth page (704); and
determining a target candidate application component (705) on which a replacement operation acts in the at least one candidate application component (705) as the first application component (203), and displaying the first application component (203) in the first region (202) of the first page (201).

11. The display method according to claim 10, wherein displaying the at least one candidate application component (705) on the fourth page (704), comprises:
in a case that the electronic device supports a folding function and is in an unfolded state, or in a case that a size of a display screen of the electronic device is greater than a preset threshold, displaying the at least one candidate application component (705) in a first region of the fourth page (704), and displaying the third application component (801) in a second region (204) of the fourth page (704).

12. The display method according to claim 9 or 10, wherein in the case of detecting the triggering operation on the third control (701, 702, 703), displaying the first application component (203) in the first region (202) of the first page (201), comprises:
in response to a triggering operation on the third control (701, 702, 703) with an editing function, determining the third application component (801) as the first application component (203), and displaying the first application component (203) in the first region (202) of the first page (201).

13. The display method according to any one of claims 1 to 12, wherein in a case that the electronic device supports a folding function and is in an unfolded state, or in a case that a size of a display screen of the electronic device is greater than a preset threshold, the method further comprises:
displaying the first application component (203) in a third region of the first page (201); wherein the first application component (203) displayed in the third region of the first page (201) is used for comparison.

14. The display method according to any one of claims 1 to 13, wherein the method further comprises:
in response to an operation on a fourth control displayed on the first page (201), generating a target application component based on the information element in the first application component (203) in the first region (202) of the first page (201) when the operation on the fourth control is detected; and
displaying the target application component.

15. A display apparatus (1300), comprising:
a first display module (1301), configured to display a first application component (203) in a first region (202) of a first page (201) of the electronic device; wherein the first application component (203) comprises at least one information element, and the first application component located in the first region (202) of the first page (201) is editable; and
a second display module (1302), configured to display at least one first candidate information element (205) associated with the first application component (203) in a second region (204) of the first page (201);
wherein the at least one first candidate information element (205) is used for updating the information element in the first application component (203).
